# EUROPÄISCHE PATENTANMELDUNG

(11) **EP 2 233 817 A1**
(43) Veröffentlichungstag der Anmeldung: **29.09.2010**
(21) Anmeldenummer: 09004447.0
(22) Anmeldetag: 27.03.2009
(51) Int. Cl.: F16M 11/28, F16B 7/14, H04R 1/08, A47B 19/00

(54) **Stativsäule, insbesondere Notenpult- oder Mikrofonstativsäule**

(71) Anmelder: König & Meyer GmbH & Co. KG, 97877 Wertheim (DE)
(72) Erfinder: Lippert, Helmut, 97906 Breitenbrunn (DE); Reichert, Peter, 97857 Urspringen (DE)
(74) Vertreter: Knoblauch, Andreas

(57) **Zusammenfassung**

Es wird eine Stativsäule, insbesondere eine Notenpult- oder Mikrofonstativsäule, mit zwei Rohren angegeben, nämlich einem Außenrohr (6) und einem Innenrohr, das teleskopierend im Außenrohr (6) geführt ist, und einer Klemmeinrichtung, mit der das Innenrohr gegenüber dem Außenrohr (6) in verschiedenen Positionen festlegbar ist, wobei die beiden Rohre jeweils eine Längsachse (8) und die Längsachse (8) umgebende gekrümmte Rohrwände aufweisen.

Man möchte auf bequeme Weise eine Einhandverstellung ermöglichen.

Hierzu ist vorgesehen, dass die Klemmeinrichtung mindestens einen Wälzkörper (11) mit einer Rotationsachse (12), die parallel zu einer Senkrechten auf die Längsachse (8) gerichtet ist, aufweist, wobei der Wälzkörper (11) zwischen einem an einem Rohr angeordneten Klemmkörper (10) und dem anderen Rohr (6) angeordnet ist und eine Umfangswand mit einer Krümmung parallel zur Rotationsachse (12) aufweist, die an die Krümmung des anderen Rohres (6) angepasst ist.

## Beschreibung

Die Erfindung betrifft eine Stativsäule, insbesondere eine Notenpult- oder Mikrofonstativsäule, mit zwei Rohren, nämlich einem Außenrohr und einem Innenrohr, das teleskopierend im Außenrohr geführt ist, und einer Klemmeinrichtung, mit der das Innenrohr gegenüber dem Außenrohr in verschiedenen Positionen festlegbar ist, wobei die beiden Rohre jeweils eine Längsachse und die Längsachse umgebende gekrümmte Rohrwände aufweisen.

Bei musikalischen Darbietungen ist es vielfach erforderlich, dass die Noten, die ein Musiker benötigt, auf einem Notenpult liegen. Dieses Notenpult sollte in der Höhe verstellbar sein, damit die jeweiligen Noten für den Musiker gut einsehbar sind. Vielfach benötigt der Musiker auch ein Mikrofon, das an einem Stativ befestigt ist. Auch die Höhenlage des Mikrofons sollte veränderbar sein, um eine möglichst gute Verstärkung der musikalischen Darbietung zu ermöglichen.

Es ist daher bei Notenpulten bekannt, die Stativsäule mit mindestens zwei teleskopierenden Rohren auszurüsten. Am Außenrohr ist dann eine Schraube befestigt, die beim Einschrauben klemmend auf das Innenrohr wirkt.

Dies hat jedoch den Nachteil, dass man für die Höhenverstellung der Stativsäule zwei Hände benötigt. Eine Hand muss das Innenrohr festhalten. Die andere Hand muss die Schraube lösen. Nach dem Verändern der Höhenlage muss man die Schraube wieder festziehen. Eine andere Ausgestaltung, die vielfach im Bereich von Mikrofonstativen verwendet wird, arbeitet mit einem Konus, der mit einer Überwurfmutter gegen das Innenrohr gespannt wird. Auch hier sind zwei Hände notwendig, um eine Verstellung herbeizuführen.

Der Erfindung liegt die Aufgabe zugrunde, auf bequeme Weise eine Einhandverstellung zu ermöglichen.

Diese Aufgabe wird bei einer Notenpult- oder Mikrofonstativsäule der eingangs genannten Art dadurch gelöst, dass die Klemmeinrichtung mindestens einen Wälzkörper mit einer Rotationsachse, die parallel zu einer Senkrechten auf die Längsachse gerichtet ist, aufweist, wobei der Wälzkörper zwischen einem an einem Rohr angeordneten Klemmkörper und dem anderen Rohr angeordnet ist und eine Umfangswand mit einer Krümmung parallel zur Rotationsachse aufweist, die an die Krümmung des anderen Rohres angepasst ist.

Mit einer derartigen Ausgestaltung kann die Länge der Stativsäule einfach dadurch geändert werden, dass man die Klemmeinrichtung löst. Dies kann mit der gleichen Hand erfolgen, die auch das eine Rohr festhält. Die Klemmeinrichtung arbeitet mit Reibkraft. Der Klemmkörper drückt auf den Wälzkörper. Der Wälzkörper wiederum liegt am anderen Rohr an. Durch die Reibung zwischen dem Wälzkörper und dem anderen Rohr einerseits und dem Wälzkörper und dem Klemmkörper andererseits wird verhindert, dass sich die gegenseitige Ausrichtung der beiden Rohre ändert, wenn die Klemmeinrichtung wirksam geworden ist. Um die Klemmeinrichtung zu lösen, muss man lediglich den Klemmkörper um eine kleine Strecke verlagern, so dass die Reibung herabgesetzt wird. Aufgrund der gekrümmten Umfangswand des Wälzkörpers ergibt sich eine relativ große Kontaktzone zwischen dem Wälzkörper und dem anderen Rohr. Diese Kontaktzone erstreckt sich praktisch über die gesamte axiale Länge des Wälzkörpers. Damit ergibt sich eine relativ große Fläche, über die die Reibkraft wirken kann. Man kann daher relativ große Kräfte aufbringen, ohne die lokalen Druckspannungen übermäßig groß zu machen. Dies hält die Gefahr gering, dass der Wälzkörper das andere Rohr verformt. Diese Gefahr besteht beispielsweise bei der Verwendung von kugelförmigen Wälzkörpern, die sozusagen nur mit einer punktartigen Berührungsfläche am anderen Rohr anliegen und daher für Rohre mit einem runden Querschnitt nicht gut geeignet sind.

Bevorzugterweise sind mehrere Klemmkörper vorgesehen, deren Umfangswände jeweils der Krümmung des anderen Rohres folgen. Dadurch wird die Klemmkraft in Umfangsrichtung verteilt. Die Krümmung des anderen Rohres muss dabei über den gesamten Umfang nicht gleich sein. Es können sich auch Abschnitte mit unterschiedlichen Krümmungen abwechseln. In diesem Fall muss die Krümmung der Umfangswand des Klemmkörpers jeweils an die Krümmung des entsprechenden Abschnittes des Rohres angepasst sein.

In einer bevorzugten Ausgestaltung ist vorgesehen, dass das andere Rohr einen kreisförmigen Querschnitt aufweist und die Krümmung der Umfangswand des Wälzkörpers einer Kreislinie folgt. Diese Ausgestaltung hat den Vorteil, dass das Innenrohr und das Außenrohr in jeder beliebigen Drehwinkellage zueinander fixiert werden können, so dass man ein Notenpult oder auch ein Mikrofon in eine gewünschte Richtung drehen kann.

Bevorzugterweise weist der Klemmkörper für jeden Wälzkörper eine Anlagefläche auf, die mit der Längsachse einen spitzen Winkel einschließt und die eine Krümmung aufweist, die an die Krümmung der Umfangsfläche des Wälzkörpers angepasst ist. Bei einem Längsschnitt hat der Klemmkörper dann lokal eine Konusfläche. Wenn der Klemmkörper bewegt wird, dann drückt er den Wälzkörper zunehmend gegen das andere Rohr und erhöht damit die Reibkraft, um eine Fixierung von Innenrohr und Außenrohr relativ zueinander zu erreichen. Gleichzeitig folgt die Anlagefläche des Klemmkörpers (in Umfangsrichtung) aber der Krümmung des Wälzkörpers, so dass der Wälzkörper auch auf der dem anderen Rohr abgewandten Seite nicht nur punktweise, sondern über eine relativ große Fläche mit der Klemmkraft beaufschlagt wird. Der Wälzkörper wird also praktisch über seine gesamte axiale Länge zwischen dem Klemmkörper und dem anderen Rohr eingeklemmt.

Vorzugsweise bildet das Rohr, an dem der Klemmkörper angeordnet ist, oder ein damit verbundener Einsatz eine Halterung für den Wälzkörper. Der Wälzkörper ist damit unverlierbar an dem Rohr gehalten. Er wird gemeinsam mit dem Rohr und dem Klemmkörper verlagert, so dass die Zuordnung zwischen Klemmkörper, Wälzkörper und Rohr immer so erhalten bleibt, dass eine klemmende Fixierung zwischen dem Innenrohr und dem Außenrohr hergestellt werden kann.

Vorzugsweise ist der Wälzkörper aus einem Kunststoff gebildet. Ein Kunststoff ist in der Regel etwas weicher als ein Metall. Wenn dann der Klemmkörper so verlagert wird, dass er den Wälzkörper zwischen sich und dem anderen Rohr einklemmt, dann kann der Wälzkörper etwas verformt werden, so dass sich der ursprünglich annähernd linienförmige Anlagebereich zu einer Fläche verbreitert. Dies verbessert die Klemmung weiter.

Hierbei ist bevorzugt, dass der Wälzkörper aus Polyurethan oder einem Kunststoff mit gleichem Rückstellverhalten wie Polyurethan gebildet ist. Der Wälzkörper kann dann, wenn der Klemmkörper auf ihn wirkt, ohne weiteres verformt werden, d.h. er wird etwas flachgedrückt, um eine größere Kontaktzone zwischen dem anderen Rohr einerseits und der Anlagefläche des Klemmkörpers andererseits zu bilden. Wenn die Klemmkraft reduziert wird, dann kehrt der Wälzkörper wieder in seine rotationssymmetrische Form zurück, d.h. er bildet wieder eine Walze, die an dem anderen Rohr anliegt und dort abrollen kann.

Vorzugsweise ist der Klemmkörper am Innenrohr angeordnet und der Wälzkörper liegt von innen am Außenrohr an. Dies ist eine relativ Platz sparende Ausgestaltung.

Vorzugsweise ist der Klemmkörper mit einer Löseeinrichtung verbunden, die vom Klemmkörper entfernt angeordnet ist, wobei die Löseeinrichtung über ein Betätigungselement mit dem Klemmkörper verbunden ist. Man kann beispielsweise den Klemmkörper an einem Ende des einen Rohrs und die Löseeinrichtung am anderen Ende des einen Rohrs anordnen. Aufgrund des Betätigungselements ist es dann möglich, die Klemmeinrichtung in Eingriff zu bringen oder zu lösen, auch wenn sie sich inmitten des anderen Rohres befindet.

Vorzugsweise weist die Löseeinrichtung einen Betätigungshebel auf. Der Betätigungshebel kann verschwenkt werden, um den Klemmkörper zu verlagern. Die Betätigung eines Betätigungshebels ist bei einem Einhandbetrieb ohne weiteres möglich.

Hierbei ist bevorzugt, dass der Betätigungshebel als zweiarmiger Hebel ausgebildet ist, dessen einer Arm parallel zur Längsachse und dessen anderer Arm senkrecht zur Längsachse verschwenkbar ist. Ein Benutzer kann dann auf den Arm drücken, der senkrecht zur Längsachse verschwenkbar ist. Diese Betätigung führt dann dazu, dass der andere Arm, der parallel zur Längsachse verschwenkbar ist, den Klemmkörper zieht oder schiebt, so dass der Klemmkörper den oder die Wälzkörper in die klemmende Position verlagert oder die Klemmung löst.

Vorzugsweise wirkt eine Rückstellfeder auf den Betätigungshebel. Diese Rückstellfeder sorgt dafür, dass die Klemmeinrichtung wirksam wird, wenn der Benutzer den Betätigungshebel loslässt. Damit wird auf einfache Weise sichergestellt, dass das Innenrohr und das Außenrohr in ihrer Lage relativ zueinander festgelegt werden, sobald der Benutzer den Betätigungshebel loslässt.

Die Erfindung wird im Folgenden anhand eines bevorzugten Ausführungsbeispiels in Verbindung mit der Zeichnung beschrieben. Hierin zeigen:
- Fig. 1: ein Notenpult mit Stativsäule,
- Fig. 2: eine Schnittansicht am oberen Bereich der Stativsäule,
- Fig. 3: eine Schnittansicht einer Klemmeinrichtung im Schnitt III-III nach Fig. 4 und
- Fig. 4: eine Schnittansicht IV-IV nach Fig. 3.

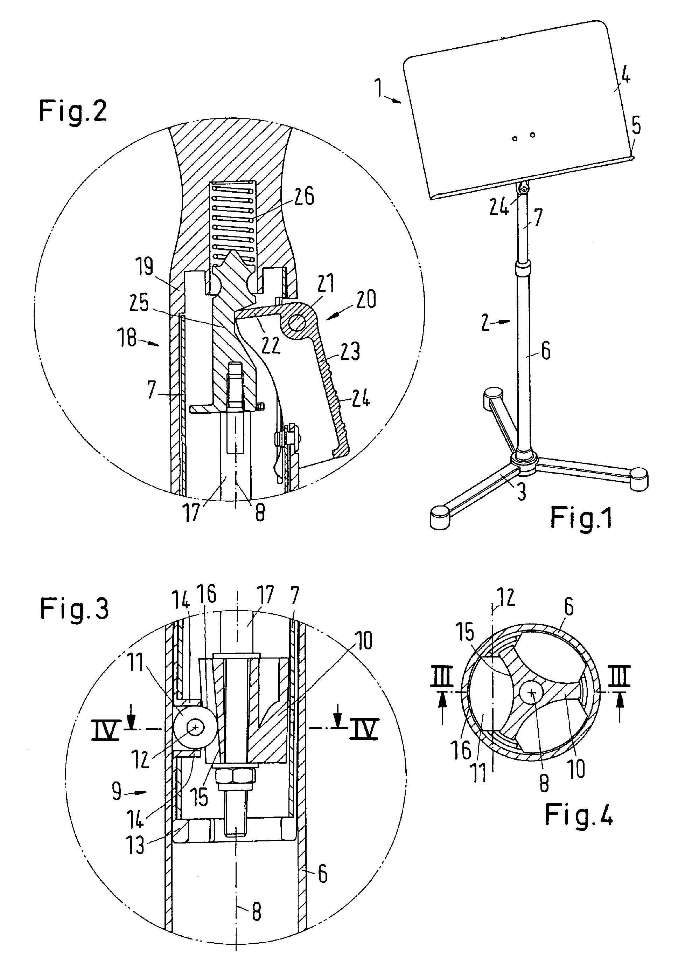

Fig. 1 zeigt ein Notenpult 1 mit einer Stativsäule 2. Am unteren Ende der Stativsäule 2 ist ein Fuß 3 vorgesehen, der im vorliegenden Fall drei Stützbeine aufweist. Am oberen Ende der Stativsäule 2 ist eine Ablage 4 für Noten vorgesehen, die an ihrem unteren Ende mit einem Stützwinkel 5 versehen ist.

Die Ablage 4 sollte auf eine Höhenlage eingestellt werden können, die für einen Musiker angenehm ist. Zu diesem Zweck ist die Stativsäule 2 unterteilt in ein Außenrohr 6 und ein Innenrohr 7, wobei beide Rohre einen kreisförmigen Querschnitt haben. Beide Rohre 6, haben also gekrümmte Rohrwände, wie dies für das Außenrohr 6 in Fig. 4 zu erkennen ist. Um die nachfolgende Erläuterung zu vereinfachen, wird eine Längsachse 8 definiert, die die Mittelachse von Außenrohr 6 und Innenrohr 7 bildet.

Das Innenrohr 7 ist in das Außenrohr 6 eingesteckt und wird im Außenrohr 6 teleskopierend geführt. Um das Innenrohr 7 in einer vorbestimmten Ausrichtung gegenüber dem Außenrohr 6 festzulegen, ist eine Klemmeinrichtung 9 vorgesehen, die in den Fig. 3 und 4 mit weiteren Einzelheiten dargestellt ist.

Die Klemmeinrichtung 9 weist einen Klemmkörper 10 auf, der im vorliegenden Ausführungsbeispiel mit drei Wälzkörpern 11 zusammenwirkt, die von innen an das Außenrohr 6 gepresst werden. Die Wälzkörper 11 haben eine Rotationsachse 12, die parallel zu einer Senkrechten auf die Längsachse 8 gerichtet ist. Die Begriffe "senkrecht" und "parallel" sind hier nicht im mathematisch exakten Sinn zu verstehen. Die Wälzkörper sind so drehbar, dass sie an der Innenwand des Außenrohres abrollen können. Die Wälzkörper 11 sind in einer Halterung 13 gehalten, die an dem Ende des Innenrohrs 7 angeordnet ist, das in das Außenrohr 6 hineingesteckt ist. Die Halterung 13 weist beispielsweise radial nach innen gerichtete Halteflansche 14 auf, die die Wälzkörper 11 in eine Richtung parallel zur Längsachse 8 in der Halterung 13 festhalten.

Der Klemmkörper 10 weist eine Anlagefläche 15 auf, die mit der Längsachse 8 einen spitzen Winkel einschließt, wie dies in Fig. 3 zu erkennen ist. Ansonsten weist sie eine Krümmung auf, die der Krümmung der Innenseite des Außenrohres 6 entspricht, aber entgegengesetzt gerichtet ist.

Die Wälzkörper 11 sind "fassförmig" ausgebildet, d.h. sie weisen eine Umfangswand 16 auf, die in einer Axialrichtung, d.h. einer Richtung parallel zur Rotationsachse 12, eine Krümmung aufweist. Diese Krümmung entspricht der Krümmung der Innenwand des Außenrohrs 6 und auch der Krümmung der Anlagefläche 15. Dementsprechend werden die Wälzkörper 11 praktisch über ihre gesamte axiale Länge zwischen dem Außenrohr 6 und dem Klemmkörper 10 eingeklemmt, wenn der Klemmkörper 10 in Richtung auf den Fuß 3 bewegt wird. Die Klemmwirkung ergibt sich durch den spitzen Winkel der Anlagefläche 15, durch den ein Abstand zwischen dem Klemmkörper 10 und dem Außenrohr 6 im Bereich der Wälzkörper 11 um so mehr verringert wird, wie der Klemmkörper 10 in Richtung auf den Fuß 3 verlagert wird.

Der Wälzkörper 11 ist aus einem Kunststoff gebildet, vorzugsweise aus einem Polyurethan oder einem Kunststoff mit dem gleichen oder einem ähnlichen Rückstellverhalten wie Polyurethan. Dies bedeutet, dass der Wälzkörper 11 bei Aufbringen einer entsprechend großen Klemmkraft etwas verformt werden kann, so dass er nicht nur linienförmige Berührungszonen mit dem Außenrohr 6 und dem Klemmkörper 10 bildet, sondern sich diese linienförmigen Berührungszonen zu Flächen erweitern. Damit kann man die Klemmkräfte entsprechend groß machen, ohne die Druckspannungen zwischen dem Außenrohr 6 und dem Wälzkörper 11 zu groß machen zu müssen. Es besteht also keine Gefahr, dass das Außenrohr 6 durch den Wälzkörper 11 verformt wird. Wenn die Klemmkraft vermindert wird, beispielsweise indem der Klemmkörper 10 vom Fuß 3 wegbewegt wird, dann nehmen die Wälzkörper 11 wieder ihre in Fig. 4 dargestellte "fassförmige" Form an, d.h. sie erreichen wieder an jeder Stelle ihrer axialen Erstreckung einen kreisförmigen Querschnitt, so dass sie bei einer nachfolgenden Verstellung des Innenrohrs 7 zum Außenrohr 6 auf der Innenseite des Außenrohres 6 abrollen können.

Dargestellt ist, dass das Außenrohr 6 einen kreisförmigen Querschnitt hat. Dies ist nicht unbedingt erforderlich. Man kann auch andere gekrümmte Querschnitte verwenden, wobei allerdings vorausgesetzt wird, dass dann die Krümmung der Umfangswand 16 des jeweiligen Wälzkörpers 11 an die Krümmung der Innenwand des Außenrohres 6 angepasst ist.

Man kann auch (in nicht dargestellter Weise) die Wälzkörper mit einer "negativen" Fassform versehen, so dass sie in ihrer axialen Mitte einen geringeren Durchmesser als an ihren axialen Enden aufweisen. In diesem Fall würden die Wälzkörper 11 von außen auf das Innenrohr 7 wirken und der Klemmkörper 10 wäre am Außenrohr angeordnet. Die in den Fig. 3 und 4 dargestellte Ausführungsform ist jedoch Platz sparender.

Der Klemmkörper 10 ist über ein Betätigungselement 17 mit einer Löseeinrichtung 18 verbunden, die in Fig. 2 dargestellt ist. Die Löseeinrichtung 18 ist in einem Stativsäulenkopf 19 angeordnet, der mit dem Ende des Innenrohres 7 verbunden ist, das nicht in das Außenrohr 6 eingesteckt ist.

Die Löseeinrichtung 18 weist einen Betätigungshebel 20 auf, der um eine Schwenkachse 21 verschwenkbar ist. Der Betätigungshebel 20 ist als zweiarmiger Hebel ausgebildet mit einem ersten Arm 22, der parallel zur Längsachse 8 verschwenkbar ist. Eine Schwenkbewegung ist natürlich nicht im mathematisch exakten Sinn parallel zu einer Achse. Gemeint ist, dass sich bei einer Verschwenkung des Betätigungshebels 20 das Ende des ersten Arms 22 vom Fuß 3 weg oder auf den Fuß 3 zu bewegen kann.

Ferner weist der Betätigungshebel 20 einen zweiten Arm 23 auf, der eine Betätigungsfläche 24 bildet. Der zweite Arm 23 ist im Wesentlichen senkrecht zur Längsachse 8 verschwenkbar, so dass ein Benutzer ihn beispielsweise mit seinem Daumen beaufschlagen kann, um ihn einzudrücken.

Der erste Arm 22 des Betätigungshebels 20 wirkt mit einem Endstück 25 zusammen, das am Betätigungselement 17 angeordnet ist. Wenn der zweite Arm 23 in Richtung auf die Längsachse 8 zu verschwenkt wird, dann bewegt der erste Arm 22 des Betätigungshebels 20 das Endstück 25 in eine Richtung vom Fuß 3 weg. Diese Bewegung überträgt sich mit Hilfe des Betätigungselements 17 auf den Klemmkörper 10, der daraufhin die Klemmkraft auf die Wälzkörper 11 vermindert und zwar so, dass die Reibung zwischen den Wälzkörpern 11 und dem Außenrohr 6 praktisch aufgehoben wird. Ein Benutzer kann dann das Innenrohr 7 beliebig im Außenrohr 6 verschieben.

Eine Rückstellfeder 26 wirkt auf das Endstück 25 und damit auf den Betätigungshebel 20. Wenn also der Benutzer den Betätigungshebel 20 loslässt, dann drückt die Rückstellfeder 26 das Klemmelement 10 über das Betätigungselement 17 so weit wie möglich in Richtung auf den Fuß. Dadurch werden die Wälzkörper 11 zwischen dem Klemmkörper 10 und dem Außenrohr 6 eingeklemmt. Die dadurch entstehende Reibungskraft fixiert das Innenrohr 7 relativ zum Außenrohr 6.

Die Höhenverstellung der Ablage 4 kann durch eine Einhandbedienung erfolgen. Ein Benutzer umgreift mit seiner Hand das Innenrohr 7 im Bereich der Löseeinrichtung 18 und drückt dann mit dem Daumen der Hand auf die Betätigungsfläche 24. Dadurch wird die Klemmeinrichtung 9 gelöst. Mit der gleichen Hand kann der Benutzer dann die Höhenlage des Innenrohrs 7 relativ zum Außenrohr 6 verändern. Sobald der Benutzer die Betätigungsfläche 24 loslässt, ist das Innenrohr 7 gegenüber dem Außenrohr 6 fixiert. Diese Fixierung beinhaltet einerseits eine Festlegung in eine Richtung parallel zur Längsachse 8, Andererseits wird das Innenrohr 7 durch die Klemmung der Wälzkörper 11 auch gegen eine Verdrehung gegenüber dem Außenrohr 6 gesichert.

Die Stativsäule kann auch zu anderen Zwecken verwendet werden, beispielsweise bei einem Boxenständer für Lautsprecherboxen.

## Patentansprüche

1. Stativsäule, insbesondere Notenpult- oder Mikrofonstativsäule (2), mit zwei Rohren, nämlich einem Außenrohr (6) und einem Innenrohr (7), das teleskopierend im Außenrohr (6) geführt ist, und einer Klemmeinrichtung (9), mit der das Innenrohr (7) gegenüber dem Außenrohr (6) in verschiedenen Positionen festlegbar ist, wobei die beiden Rohre (6, 7) jeweils eine Längsachse (8) und die Längsachse (8) umgebende gekrümmte Rohrwände aufweisen, **dadurch gekennzeichnet, dass** die Klemmeinrichtung (9) mindestens einen Wälzkörper (11) mit einer Rotationsachse (12), die parallel zu einer Senkrechten auf die Längsachse (8) gerichtet ist, aufweist, wobei der Wälzkörper (11) zwischen einem an einem Rohr angeordneten Klemmkörper (10) und dem anderen Rohr angeordnet ist und eine Umfangswand (16) mit einer Krümmung parallel zur Rotationsachse (12) aufweist, die an die Krümmung des anderen Rohres (6) angepasst ist.

2. Stativsäule nach Anspruch 1, **dadurch gekennzeichnet, dass** mehrere Klemmkörper (11) vorgesehen sind, deren Umfangswände (16) jeweils der Krümmung des anderen Rohres (6) folgen.

3. Stativsäule nach Anspruch 1 oder 2, **dadurch gekennzeichnet, dass** das andere Rohr (6) einen kreisförmigen Querschnitt aufweist und die Krümmung der Umfangswand (16) des Wälzkörpers (11) einer Kreislinie folgt.

4. Stativsäule nach einem der Ansprüche 1 bis 3, **dadurch gekennzeichnet, dass** der Klemmkörper (10) für jeden Wälzkörper (11) eine Anlagefläche (15) aufweist, die mit der Längsachse (8) einen spitzen Winkel einschließt und die eine Krümmung aufweist, die an die Krümmung der Umfangsfläche (16) des Wälzkörpers (11) angepasst ist.

5. Stativsäule nach einem der Ansprüche 1 bis 4, **dadurch gekennzeichnet, dass** das Rohr (7), an dem der Klemmkörper (10) angeordnet ist, oder ein damit verbundener Einsatz eine Halterung (13) für den Wälzkörper (11) bildet.

6. Stativsäule nach einem der Ansprüche 1 bis 5, **dadurch gekennzeichnet, dass** der Wälzkörper (11) aus einem Kunststoff gebildet ist.

7. Stativsäule nach Anspruch 6, **dadurch gekennzeichnet, dass** der Wälzkörper (11) aus Polyurethan oder einem Kunststoff mit gleichem Rückstellverhalten wie Polyurethan gebildet ist.

8. Stativsäule nach einem der Ansprüche 1 bis 7, **dadurch gekennzeichnet, dass** der Klemmkörper (10) am Innenrohr (7) angeordnet ist und der Wälzkörper (11) von innen am Außenrohr (6) anliegt.

9. Stativsäule nach einem der Ansprüche 1 bis 8, **dadurch gekennzeichnet, dass** der Klemmkörper (10) mit einer Löseeinrichtung (18) verbunden ist, die vom Klemmkörper (10) entfernt angeordnet ist, wobei die Löseeinrichtung (18) über ein Betätigungselement (17) mit dem Klemmkörper (10) verbunden ist.

10. Stativsäule nach Anspruch 9, **dadurch gekennzeichnet, dass** die Löseeinrichtung (18) einen Betätigungshebel (20) aufweist.

11. Stativsäule nach Anspruch 10, **dadurch gekennzeichnet, dass** der Betätigungshebel (20)-als zweiarmiger Hebel ausgebildet ist, dessen einer Arm (22) parallel zur Längsachse (8) und dessen anderer Arm (23) senkrecht zur Längsachse (8) verschwenkbar ist.

12. Stativsäule nach Anspruch 10 oder 11, **dadurch gekennzeichnet, dass** eine Rückstellfeder (26) auf den Betätigungshebel (20) wirkt.
